# EUROPEAN PATENT SPECIFICATION

(11) **EP 3 142 493 B1**
(45) Date of publication and mention of the grant of the patent: **09.12.2020**
(21) Application number: 15729600.5
(22) Date of filing: 15.05.2015
(51) Int. Cl.: A23G 4/04, A23G 4/18

(54) **ADVANCED GUM FORMING**
VERBESSERTE HERSTELLUNG VON KAUGUMMI
FORMATION DE GOMME AVANCÉE

(30) Priority: 16.05.2014 US 201461994512 P
(43) Date of publication of application: 22.03.2017
(73) Proprietor: Intercontinental Great Brands LLC, East Hanover, NJ 07936 (US)
(72) Inventor: MODAK, Bhairavi, East Hanover, New Jersey 07936 (US)
(74) Representative: Boult Wade Tennant LLP
(86) International application number: PCT/US2015/031074
(87) International publication number: WO 2015/175935

(56) References cited:
- EP-A1- 2 206 437
- WO-A1-2014/047263
- WO-A2-2012/125397
- WO-A2-2013/013041
- WO-A2-2013/049800
- US-A- 3 455 755
- US-A- 3 857 963
- US-A- 5 971 739

## Description

### FIELD OF THE INVENTION

The disclosure relates generally to methods for manufacturing chewing gum, and more particularly to methods for forming and/or sizing chewing gum.

### BACKGROUND OF THE INVENTION

Typically, the process of making and packaging gum products is time-consuming and involves a significant amount of machinery. The process of making and packing gum products can include mixing and producing a finished gum as a non-uniform output, extruding and forming the finished gum into loaves, conditioning the loaves of the finished gum, extruding the loaves into a continuous thin sheet of the finished gum, rolling the continuous sheet through a series of rollers to a uniform reduced thickness, scoring and dividing sheets into individual scored sheets, conditioning the individual sheets in a conditioning room, dividing sheets into gum pieces, and packaging the gum pieces. Such processes of making and packaging gum products are disclosed in U.S. Patent No. 6,254,373 assigned to the predecessor of interest of the present assignee, and U.S. Patent Application No. 12/352,110 assigned to the present assignee.

US5971739 discloses an apparatus and a process for improved production, processing, and packaging of slab-type and stick-type chewing gum products. The gum product is preferably produced by a continuous extrusion process. The resultant molten gum product is formed into a continuous tape or ribbon of material by a second extrusion apparatus. The strand of gum material is passed through a cooling apparatus and into a final sizing mechanism. The sizing apparatus maintains the material in a precisely dimensioned size and shape configuration. The sizing apparatus includes a plurality of parallel and perpendicular rollers that form the continuously fed gum material to a final size and finish of high dimensional tolerances. The resultant material exiting from the sizing apparatus has the final specified cross-sectional size and shape.

Traditional sizing machinery typically employ a series of sizing rollers arranged in sequence over a conveyor belt to gradually and progressively reduce the thickness of gum from around 10-25 mm to typically about 2-6 mm. Though just used for sizing, these rollers are often referred to as rolling and scoring rollers. Employing a series of rollers in this manner can be inefficient in that they occupy a relatively large footprint in a manufacturing plant. In addition, to prevent sticking of gum the rollers are often dusted with a suitable powder agent that negatively impact flavor and maintenance/cleanup of the forming environment. Such traditional lines also typically will necessitate a fair amount of subsequent cooling and/or conditioning prior to packaging as warm pliable product does not package well.

The present invention is directed toward improvements and advancements over such prior systems and methods of making and packaging gum products.

### BRIEF SUMMARY OF THE INVENTION

Disclosed is a method of forming chewing gum, the method including providing a pair of rollers, sizing the chewing gum from an unshaped mass into a first chewing gum sheet including a first thickness via a first sizing device, the first sizing device being disposed upstream of the pair of rollers, transporting the first chewing gum sheet with the first thickness to the pair of rollers, and maintaining the chewing gum at the first thickness during the transporting between the first sizing device and the pair of rollers, and sizing the first chewing gum sheet into a second chewing gum sheet having a second thickness using the pair of rollers, wherein the first thickness is greater than the second thickness, and the second thickness is between about 0.3 mm to 10 mm.

Also disclosed is a method of forming chewing gum, the method including providing a pair of rollers, transporting the chewing gum to the pair of rollers at a first speed, sizing the chewing gum into a gum sheet having a thickness between about 0.3 mm to 10 mm, and transporting the chewing gum sheet from the pair of rollers at a second speed that is greater than the first speed.

### BRIEF DESCRIPTION OF THE DRAWINGS

The accompanying drawings incorporated in and forming a part of the specification embodies several aspects of the present invention and, together with the description, serve to explain the principles of the invention. In the drawings:
FIG. 1 is a schematic illustration of a gum manufacturing system according to a first embodiment;
FIG. 2 is a plan view of the schematic illustration shown in FIG. 1;
FIG. 3 is a schematic illustration of a gum manufacturing system according to a second embodiment; and
FIG. 4 is a schematic illustration of a gum manufacturing system according to a second embodiment.

While the invention will be described in connection with certain preferred embodiments, there is no intent to limit it to those embodiments.

### DETAILED DESCRIPTION OF THE INVENTION

The present invention discloses a method of forming chewing gum, the method comprising:
providing a pair of rollers; sizing the chewing gum from an unshaped mass into a first chewing gum sheet including a first thickness via a first sizing device, said first sizing device being disposed upstream of said pair of rollers;
transporting said first chewing gum sheet with said first thickness to said pair of rollers, and maintaining the chewing gum at said first thickness during said transporting between said first sizing device and said pair of rollers; and
sizing the first chewing gum sheet into a second chewing gum sheet having a second thickness solely using said pair of rollers, wherein said first thickness is greater than said second thickness, and said second thickness is between about 0.3 mm to 10 mm,
wherein said sizing said first chewing gum sheet into said second chewing gum sheet with said second thickness includes driving the pair of rollers in opposite directions to pull the chewing gum through a gap between the pair of rollers, and deforming said first chewing gum sheet to form the second chewing gum sheet. The following disclosure will detail particular embodiments according to the present disclosure, which provide improvements for forming a chewing gum sheet. In exemplary embodiments, the systems described herein include a set or pair of rollers for forming chewing gum (referred to herein as chewing gum mass, chewing gum structure, and simply chewing gum) into a continuous web or sheet having a desired thickness and a width, while optionally imparting temperature control to the gum at the same time. Rollers such as but not limited those described in United States Application No. 13/522,767. Moving walls such as the moving walls described in United States Application No. 61/510,119.

The chewing gum and chewing gum sheet discussed above includes, but is not limited to, compositions ranging from and inclusive of compounded elastomer to finished gum, which may include compounded elastomer in addition to some compounding aids, master batch gum base, compounded elastomer in addition to some subsequent gum ingredients, compounded elastomer in addition to some gum base ingredients and some subsequent gum ingredients, gum base, gum base in addition to some subsequent gum ingredients, master batch finished gum, and finished gum. Certain compositions of chewing gum may have a non-uniform texture and/or a multi-layered composition. Although, most of the embodiments discussed herein involve chewing gum (particularly finished chewing gum), other confectioneries that do not contain an elastomeric compound can also be formed, sized and/or conditioned using the systems discussed below.

The systems are capable of forming chewing gum into a gum sheet including a desired width and thickness with a lower variance than conventional lines. Further, the system can produce a much wider width of the sheet of the gum when compared to systems including numerous pairs of rolling and scoring rollers of conventional lines, and can also eliminate a need of powder dusting material. By eliminating the use of powder dusting material, a cleanup time for change over can be reduced to a fraction of the conventional rolling and scoring lines, thereby significantly reducing a production down time. This additionally reduces overall cost of operating the line because there is no need for the additional dusting material. In addition to these advantages over the conventional lines, the rollers of the system can also be chilled (or heated in some embodiments) to provide cooling during deformation of the gum mass to a desired thickness and width. Therefore, the system according to some embodiments can form and cool or heat the gum mass all at one step, thereby proving many advantages over conventional gum lines.

Further, gum products manufactured according to embodiments of the present disclosure can be structurally distinguishable from gum products produced using conventional gum lines, as the systems may result in different crystallization of gums by quick cooling of the gum. Further, more aesthetically pleasing chewing gum production can occur by eliminating use of powder dusting materials and producing chewing gum products having a desired thickness and width with relatively small thickness and width variances when compared to those produced via conventional gum lines.

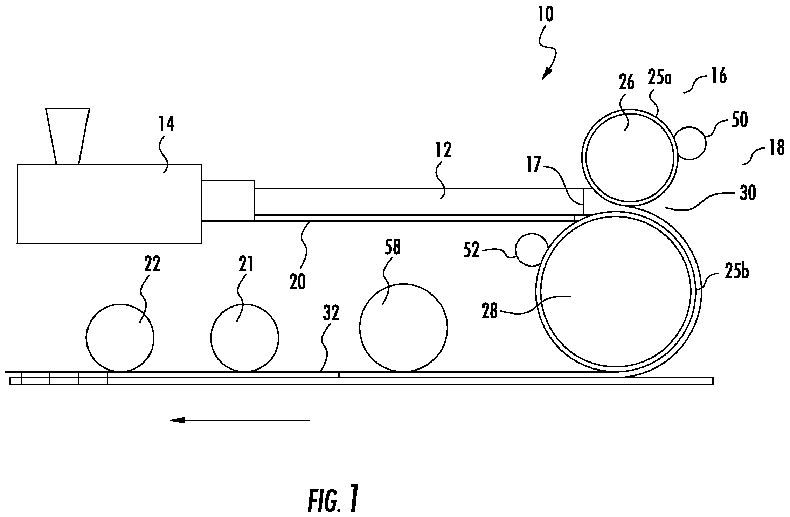

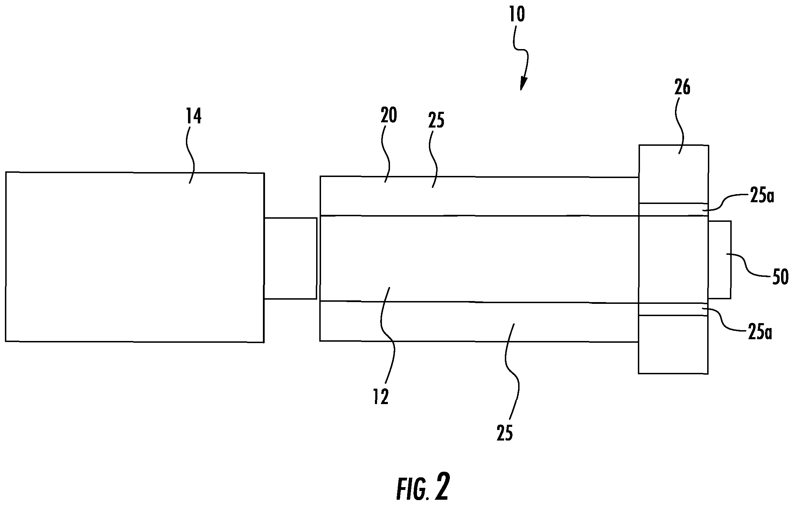

Referring now to FIGS. 1 and 2, a gum manufacturing system 10 for forming chewing gum 12 into a chewing gum sheet 13 of a desired thickness is illustrated. The gum manufacturing system 10 generally includes a gum mixing station 14 and a gum forming or sizing station 16 that includes a pair of rollers 18. In the exemplary embodiment of FIG. 1, the gum mixing station 14 is a gum sizing device in the form of a forming extruder (perhaps low shear) that mixes chewing gum 12 into its final compositional form and extrudes the chewing gum 12 with a substantially uniform thickness (a first thickness 17). The system as shown in FIG. 1 also includes a conveying device 20 for transporting gum 12 from the extruder 14 to the sizing station 16. Optional scoring roller 21 and cutting roller 22 may also be provided in the system 10. The manner in which the above introduced elements of the system 10 interact with each other to manufacture the gum 12 will now be discussed in greater detail hereinbelow, beginning with the gum mixing station 14.

In the exemplary embodiment shown in FIGS. 1 and 2, the gum mixing station of first gum sizing device 14 is a continuous extrusion mixer (or series thereof). This extrusion mixer or extruder 14 may be twin screw extruder, planetary roller extruder, an additional pair of rollers such as the pair of rollers 18, or simply pumping mechanism. The extruder 14 may mix the gum 12 into its final compositional form prior to being sent to the sizing station 16, and extrudes the gum 12 at the first thickness 17. In an exemplary embodiment, the gum 12 is extruded from the extruder 14 in a sheet form (i.e. as a first sheet) with the first thickness 17 of at least 10mm, and more particularly 10mm - 50mm or at least 19mm, at least 20mm, at least 30mm, at least 40mm, or at least 50mm. It should be appreciated that the first thickness 17 of this first sheet may or may not be uniform, with the thickness ranges as discussed herein referring to maximum thicknesses if the first thickness 17 is non-uniform. It should also be appreciated that prior to being extruded from the extruder 14 the gum 12 is unshaped. For purposes of this disclosure, gum in unshaped form will be defined as gum at any stage prior to being extruded or ejected from the mixer 14 (e.g. gum or gum ingredient(s) at any pre-extrusion/pre-ejection stage that has not arrived at the extruder or mixer 14, or is still being mixed or processed within the extruder 14).

Though the gum 12 is shown to be extruded from an extruder 14 disposed in a relatively horizontal position, it should be appreciated that the extruder 14 (or die/orifice thereof) may also be disposed in a relatively vertical position, such that the gum 12 is output downwardly from the extruder 14 onto one of the pair of rollers 18 of the gum sizing station 16.

The gum 12 with the first thickness 17 is extruded onto the conveying device 20 for transport to the gum sizing station 16 (which like the mixer/extruder 14 is also a type of gum sizing device). The gum 12 is shown to be extruded onto the conveying device 20 as something of a continuous brick or loaf, though it should be noted that the gum may be extruded in a non-continuous form, and in other geometries such as but not limited to a rope.

As is shown in FIG. 2, the gum 12 is transported along the conveyor 20 at a first speed of approximately (this first speed and other speeds will be discussed in greater detail below). The chewing gum 12 arrives at the sizing station 16 at this first speed. It should be noted that the gum 12 is transported directly from the mixer/extruder 14 to the sizing station 16 (via the conveying device 20) without employing an accumulation device such as a hopper. During this transportation from the mixer/extruder 14 to the sizing station 16 the chewing gum 12 is maintained at the first, substantially constant thickness 17. It should be noted that while employing a collection device such as a hopper might be considered beneficial in that it helps with surge control and guidance of the gum 12 to the rollers 18, simply conveying the gum directly to the sizing station 16 from the extruder 14 without using a collection device provided some unexpected advantages. For example, when certain forms of gum are collected by a hopper disposed upstream of the rollers 18 the gum sheet can be formed with an inconsistent width. In addition, gum was sometimes found to accumulate in the hopper, creating inefficiencies and irregularities. Directly feeding the gum 12 (particularly with a first thickness that may be uniform) helped alleviate some of these issues.

As is noted above, the sizing station 16 includes the pair of sizing rollers 18. The gum sizing station 16 provides for sizing and potentially temperature control (i.e. cooling or heating) and reduces the need for gradual progressive sizing of the gum via a series of rolling and scoring rollers by providing a substantial amount of thickness reduction at the rollers 18.

Upon reaching the sizing station 16, the gum 12 is passed between the pair of rollers 18, which, in this embodiment, are an upper roller 26 and a lower roller 28. These rollers 18 each include guides 25a and 25b positioned to receive and direct the gum 12 towards a gap between the rollers 30. The rollers 18 are externally driven, for example by an operably coupled motor. In an exemplary embodiment, each of the rollers 18 is provided with a motor, such that a rotational speed of each of the rollers 18 can be controlled independently. The gum 12 leaves the extruder 14 and travels along the conveyor 20 at the first width, which may be between about 25 mm to 1 m, or perhaps more in order to accommodate the gum sheet 13 produced. The width of the gum 12 leaving the extruder may be the same or lesser than the width of the sheet 13 leaving the rollers 26, 28. It may be desirable to have a wider sheet of the gum 12 of greater than about 0.6 m in width so as to be able to provide a substantial gum mass volume that can operate at slower speeds while generating sufficient output.

The chewing gum 12 may fall from the conveyor 20 to the lower roller 28 via gravity. In the exemplary embodiment of FIG. 1, the gum 12 is disposed upon and is guided by the lower roller 28 toward the upper roller 26 and gap 30 between the upper and lower rollers 26, 28. The counter rotating upper roller 26 and lower roller 28 pull the gum mass 12 between the rollers 18 and through the gap 30 to form and size the gum mass 12 into the gum sheet 13 as will be explained in more detail below.

In the embodiment shown in FIG. 1, the rollers 18 include rotational axes that may horizontally offset. The rollers 18 may also be vertically offset, with the horizontal and vertical displacement of the axes and rollers themselves facilitating creation of the gap 30.

The rollers 18 and the gap 30 are configured to apply a compressive and/or deforming force onto the gum 12 to form the gum sheet 13 with a second thickness 32 that may also generally uniform and between about 0.3 mm to 10.0 mm. The desired second thickness 32 at least substantially corresponds to a height or clearance of the gap 30. The upper roller 26 and the lower roller 28 counter rotate to pull the gum 12 through the gap 30. This pulling or dragging of the 12 by the rollers 18 results in a drag flow of the gum through the gap 30. In the exemplary embodiment shown in FIG. 1, the upper roller 26 rotates in a counter clockwise direction, while the lower roller 28 rotates in a clockwise direction. As the gum 12 is pulled through the minimum distance of the gap 30, the gum mass 12 is deformed between the rollers 18, with this deforming/sizing being substantially extensional.

It should be appreciated that the gum 12 is deformed from a sheet with the first thickness 17 (of at least 10 mm) into a sheet including a second thickness 32 between about 0.3 mm to 10 mm solely via the pair of rollers 18. In fact, in an exemplary embodiment the first sizing device (which is the extruder 14 in FIG. 1) and the pair of rollers 18 are solely responsible for sizing the gum 12 from an unshaped mass to the second thickness of 0.3 mm to 10 mm, with sizing to the first thickness 17 being the only intermediary stage between extrusion from the extruder 14 (the gum being an unshaped mass prior to extrusion) and sizing to the second thickness 32 via the rollers 18. Indeed, in the embodiments shown in the Figures the system 10 is absent any sizing devices between the extruder 14 and the pair of rollers 16.

The pair of rollers 18 compresses and/or deforms the gum mass 12 as it passes between the upper and lower rollers 26, 28 to provide a generally uniform thickness, such that the thickness of the gum sheet 13 is preferably within about 20% cross-web variance, more preferably within about 10% cross-web variance, and most preferably within about a 5% cross-web variance, or less. For example, if a desired thickness 32 of the gum sheet 13 exiting the pair of rollers 18 is 6 mm, the gap 30 (and particularly the minimum distance of the gap) between the upper and lower rollers 26, 28 is adjusted such that the thickness across the width of the gum sheet 13 is preferably between about 4.8 and 7.2 mm, and more preferably between about 5.2 and 6.6 mm. As a result, a significant degree of precision and accuracy can be accomplished with the pair of rollers 18 for forming chewing gum. Some variance is expected with various gum recipes due to variations in bounce back and shrinkage due to variations in elasticity, viscosity and resiliency of a given gum recipe. The gum sheet 13 having a generally uniform thickness 32 may subsequently expand in its thickness or shrink in its thickness depending on a formulation of the gum. Further, the gum sheet 13 having a generally uniform thickness 32 may subsequently be shaped, textured, and/or printed, which may alter the generally uniform thickness.

The pair of rollers 18 can be configured to have various diameters and widths (with the width and/or diameter of the upper roller 26 being the same or different than the width or diameter of the lower roller 28) depending on physical properties of the gum, a desired second thickness 32, a desired final width of the gum sheet 13, and a desired temperature of the gum sheet 13 exiting the rollers 18. In the embodiment shown in FIG. 1, the lower roller 28 has a larger diameter than the upper roller 26. However, in other embodiments, the upper roller can have a larger diameter than the lower roller, or the rollers can have a same diameter. Desirably, the lower roller 28 has a diameter between about .5 m and 3 m and a width between about 0.6 m and 1.3 m; and the upper roller 26 has a diameter between about .25 m and 1 m with a similar width. As illustrated, preferably the roller that carries the gum for several degrees of rotation is relatively larger in diameter for certain cooling/heating and/or setting effects as discussed later on.

While narrower rollers are possible, the rollers having widths between about 0.6 m and 1.3 m or wider provides the opportunity to produce a gum ribbon or sheet that is about the same in width, typically at least slightly narrower. Therefore, the rollers 18 can provide substantial gum capacity improvements over the conventional thickness reduction process involving a rolling and scoring rollers. The pair of rollers 18 thus can provide a gum sheet 13 that is 50 mm to 50 cm or more than 50 cm in width (width of the gum sheet 13 being measured in a direction substantially perpendicular to direction of gum movement through the system 10), and 125% -300% (or more) wider gum ribbons or sheet of the finished sized gum than conventional sizing type forming extruder with progressive size reduction rollers, and as noted throughout, while using significantly less energy. The pair of rollers 18 thus can also provide a gum rope that is less than 50 mm, or 20 mm to 50 mm, and 25mm to 45 mm, with gum including a width under 50 mm being defined as rope or perhaps ribbon. Further, the pair of rollers 18 can produce a gum sheet 13 having a desired width within a relatively small variance. In one embodiment, rollers 18 can produce a gum sheet 13 having a desired width preferably within 20% variance, more preferably within 10% variance, and most preferably within 5% variance or less. With a wider gum material, the speed of gum forming process can be reduced substantially if desired while still processing the same amount of gum as traditional rolling and scoring lines or higher speeds can be used to result in greater gum volume production.

The pair of rollers 18 rotate at a desirable speed to effectively pull the chewing gum 12 through the gap 30 and deform the chewing gum 12 into the gum sheet 13. In so doing, the rollers 18 are run at a desired rotational speed that pulls the chewing gum 12 through the gap 30. In an exemplary embodiment, this second speed is greater than the first speed at which the chewing gum arrives at the forming station 16 (as alluded to above, these speeds will be discussed in greater detail below). As the chewing gum 12 is transported to the forming station 16 via the conveyor 20 in the exemplary embodiment of FIGS. 1 and 2, wherein the second speed is also the speed of the conveyor 20. Further detail regarding the forming station 16 and system elements downstream of the forming station 16 will be discussed hereinbelow.

The rollers of the forming station 16 shown FIGS. 1 and 2 may be configured to have a smooth or contoured surface finish. The pair of rollers 18 may also be configured with any desirable actuation devices, such as but not limited to a servomechanism(s) that controls vertical positioning of the rollers 26 and 28 relative to each other, and thereby adjusts the gap 30.

The upper roller 26 and the lower roller 28 can run at various rotational speeds to create the desired second speed mentioned above, with the rotational speed of the second roller matching the speed of the second conveyor. These rollers 18 may run at a same rotational speed or different rotational speeds, with the rotational speed of the rollers being selected depending on physical properties of the input gum, an amount of heat transfer desired via the rollers, and the speed of the gum 12 when it reaches the forming station 16 (i.e. the first speed mentioned above). In exemplary embodiments, the lower roller 28, which may be configured to have a larger diameter than the upper roller 26, is configured to run at a lower rotational speed than the smaller upper roller. Further, a relative rotational speed of rollers 26 and 28 may be adjusted to produce desired quality of the gum sheet 13, such as surface characteristics, thickness tolerance, temperature, etc.

In exemplary embodiments, the rollers 26 and 28 may be configured to run at a same linear speed or at different linear speeds as measured at the tangent of the surface of the rollers. In one embodiment, one roller is set at a constant linear speed, while a linear speed of the other roller can be varied ± 30% of the constant linear speed of the roller. For example, a linear speed of the lower roller 28, can be set at 3 m/min, while a linear speed of the upper roller 26, may be controlled between 2.1 m/min and 3.9 m/min. In such embodiment, the linear speed of the upper roller 26 may be adjusted within the set range to achieve a smoother surface of the gum and to minimize wrinkling of the gum. Alternatively, the upper roller 26 may be set at a constant linear speed, while the linear speed of the lower roller 28 may be controlled within a desired range. A linear speed of one roller can be varied relative to a linear speed of the other roller within ranges of ± 40%, ± 30%, ± 20%, or ± 10%, depending on characteristics of a gum and a desired thickness and a width of the gum sheet 13 to maximize the smoothness and minimize wrinkles and other irregularities on the gum surface. In a different embodiment, the rollers 26 and 28 having different diameters can be configured to run at a same linear speed (e.g. same speed at the tangent; but different angular speed in that the smaller roller rotates faster). Notably however (and as mentioned above), the pair of rollers 18 run at greater speeds (i.e. surface speeds) than the speed at which the gum 12 arrives at the rollers 18 (via the conveyor 20 in FIGS. 1 and 2), so as to allow the rollers to pull and extend the sheet 13 downstream for sizing. Indeed, a decrease in thickness from thickness 17 to thickness 32, as occurs after the gum has passed through the gap 30, results in a decrease in cross-sectional area of the sheet 13. In order to account for this decrease in cross-sectional area, the velocity of the rollers 26 and 28 should increase relative to the velocity at which the gum arrives (via the conveyor 20 in FIGS. land 2). For example, if the conveyor 20 is running at 20 meters/min and the final thickness 32 is about 20% less than the first thickness 17, then the velocity of the rollers 26 and 28 should be 25 meters/min.

Referring now to the material and set up of the rollers 18 in greater detail, it should be appreciated that the dimensional configurations and material for the rollers 26 and 28 and support structures thereof are engineered to minimize or eliminate deflection in the rollers 26 and 28. The rollers 26 and 28 are set up to provide a generally uniform cross web spacing 30 (gap) between the rollers 26 and 28 from one end of the rollers to the other end. However, some high viscosity and/or low elasticity gum compositions can impart a high stress to the rollers 26 and 28 as the rollers deform the gum mass 12. Some very viscous gum structures can exert high stress on the rollers 26 and 28. Such stress can result in a deflection in the rollers 26 and 28, and resultant uneven spacing, and undesirable non-uniform cross-web thickness.

Thus, in one exemplary embodiment, the rollers 26 and 28 are strengthened by providing additional structural supports and/or supporting the rollers closer to the ends of the rollers to minimize or eliminate the deflection in the rollers. In one embodiment, the rollers 26 and 28 are strengthened and supported such that the maximum deflection between the rollers is maintained under 0.5 mm, preferably under 0.1 mm when processing gum mass 12 with high viscosity and/or low elasticity. Further, the roller deflection can also be minimized or eliminated by increasing a diameter of the rollers or forming the rollers from materials having increased strength to withstand the stress imparted by the gum mass. For wider rollers, more strength or stiffness is needed to withstand the stress and a larger diameter roller can be beneficial in providing sufficient roller stiffness to minimize the deflection. Thus, a diameter to width ratio of the rollers is carefully selected considering physical properties of gum mass 12 and desired gum sheet thickness to minimize the deflection in the rollers.

Alternatively, physical properties of the gum mass 12 can be adjusted to minimize the deflection in the rollers 26 and 28 during the deforming and sizing process. For example, a temperature of the gum from the mixer 14 may be raised to improve deformability of the gum mass 12 entering the pair of rollers 18. In other embodiments, one or both of the rollers 26 and 28 may be heated to transfer heat to the gum mass 12, thereby decreasing viscosity and improving compressibility and/or formability of the gum sheet 13. An amount of pressure and heat exerted on the gum mass 12 may have various effects on the final gum product.

As shown in the exemplary embodiments of FIGS. 1 and 2, it should be appreciated that the lower roller 28 carries the gum over several degrees of rotation serves to transfer heat from or to the gum sheet 13 quickly and efficiently due to the relatively thin state of the gum and due to heat transfer via conduction. To facilitate the same, in one embodiment, at least the lower roller (and preferably both rollers) may be chilled or heated. In some embodiments, the pairs of rollers 18 may be provided with internal channel(s) wherein a heating or cooling fluid such as tempered water or lower freezing point fluid flows for heating or cooling the rollers. Therefore, the surface temperature of the rollers may be adjusted from about -15°C to 90 °C. In one embodiment, the surface temperature of the rollers 26, 26a, and 28, 28a can be controlled between about 0°C-90C° by circulating a cooling fluid or heating fluid having a temperature between about 0°C-90C° within the rollers. According to one embodiment, the forming rollers are chilled to a surface temperature between about 5°C to 25C°; and preferably around 15C°. This has several advantages as reducing or eliminating later conditioning/cooling, and reducing flash off of heat sensitive ingredients such as flavors as the gum is cooled much earlier in the process. In a different embodiment, the forming rollers are heated to a surface temperature between about 40°C to 60C°, which can facilitate forming of a gum sheet and reduce thickness variation of the gum sheet.

In an exemplary embodiment, the gum mass 12 having an average temperature between about 40°C-60C° is fed between the pair of forming or sizing rollers 18. One or both rollers 26, 28 are heated to a surface temperature between about 30°C-70C°, more preferably between about 40°C-60C° to be closely matched to the temperature of the finished gum mass 12. Such heating of the roller(s) facilitates forming of the gum and controls the viscosity of the gum, which is carried by the lower roller 28. If the surface temperature of roller(s) 26 and 28 is too high, in some embodiments the gum may heat and then become too sticky and stick to the roller(s). If the surface temperature of the roller(s) is too low, the local viscosity of the gum may increase to a point, wherein the gum becomes too hard for forming or may not stay on the lower roller 28. Thus, depending on a formulation of the gum, the surface temperature of the roller(s) may be set to aid in preventing the gum sticking to the roller(s), and to facilitate forming of the gum.

The web of gum formed, sized, and cooled or heated using the rollers 26, 28 may have a temperature gradient across the thickness 32 of the gum sheet 13. This is because the gum sheet 13, a substantial amount of which is elastomer, is not a good thermal conductor, and thus the middle portion of the gum may remain at a different temperature than that of surfaces, which are in direct contact with the rollers. Such a temperature gradient can be amplified when the rollers 26 and 28 are maintained at different temperatures. For example, in one embodiment, the upper roller(s) 26 are heated to a surface temperature of about 50°C and the lower roller(s) 28 are chilled to a surface temperature of about 5°C, wherein the gum has an average temperature of about 40°C is formed, sized and conditioned into the gum sheet 13 having a thickness as measured at a thickness 32 of about 2 mm. In this embodiment, the gum sheet 13 can have a large temperature gradient, wherein a temperature of the gum surface in contact with the lower roller is close to the surface temperature of the lower roller of about 5°C and a temperature of the gum surface in contact with the heated upper roller is close to the surface temperature of the upper roller of about 50°C with a temperature of the gum sheet 13 therebetween varying from about 5°C to about 50°C. In such embodiments, crystallization of the chilled gum surface can be substantially different than that of the heated gum surface, as a low temperature conduction cooling of the gum sheet via the chilled roller can result in a very different crystallization compared to a slow cooled gum sheet, for example by convection. Even in embodiments, wherein both rollers 26 and 28 are chilled to a same temperature, the gum sheet 13 may have a temperature gradient across a thickness of the gum sheet, although much less than that of gum sheets 13 formed by rollers of different temperatures.

A temperature variation in an input gum entering the gum forming station 16 can have a significant impact on the temperature consistency of the gum sheet 13. This is because the temperature altering of the gum sheet 13 by conduction via the pair of forming roller(s) 18 occurs in a fraction of time when compared to traditional cooling and conditioning of the gum via convection, which can be hours or even days. As such, the temperature variation in the input gum mass can translate into a temperature variation in the gum web that is quick cooled, for example in less than one minute, by chilled roller(s) such as 18. Thus, some embodiments can include measures to control a temperature variation of the input gum mass within a desired range. For example, a mixing extruder for preparing the input gum structure can be equipped with sophisticated temperature control modules to extrude the gum within the desired temperature range. In other embodiments, an optional conditioning unit between the mixer and the gum forming station 16 for conditioning the mass 12 to a desired temperature range may be included along the system (such as system 10).

Chilled forming rollers 26 and/or 28 can effectively reduce a temperature of the relatively thin gum sheet 13 as it is carried by the chilled forming roller(s) for heat transfer. Therefore, in an exemplary embodiment, a relatively large diameter roller may be provided wherein the gum sheet 13 is carried over at least about ¼ a rotation (at least about 90 degrees and up to about 180 degrees) to provide a long residence time to facilitate heat transfer out of the gum sheet and to the chilled roller due to contact and conduction. The chilled fluid travelling through the rollers is excellent at maintaining the forming roller(s) to a surface temperature between about 5°C to 25C°; and preferably around 15C°. The chilled forming roller(s) having a cold metal surface having a high thermal conductivity works effectively to reduce the temperature of the relatively thin chewing gum, preferably having a thickness less than 10 mm; and more preferably at 0.5-6 mm, by facilitating heat transfer from the gum sheet 13 to the cold metal surface. The heat transfer roller may advantageously be one or both of the pair of forming rollers, or may also independently be a separate roller upon which gum is transferred.

In an exemplary embodiment, the upper roller 26 includes a diameter of about 0.5 meter, and the lower roller 28 includes a diameter of about 1 meter, each being cooled to around 15°C. Use of the pair of rollers 18 may also provide the opportunity to eliminate dusting of the gum with talc or other particulate anti-sticking agent that are used in more conventional rolling reduction operations. This can avoid the need for dust collection equipment as used in traditional rolling and scoring lines; and can also be used to create a more aesthetically pleasing product that has more vibrant colors as dusting operations dull the final product color. Further, by eliminating the use of dusting powders, a clean up process of the gum manufacturing line (such as system 10) can be dramatically made easy, since a substantially large portion of residual mess requiring lengthy cleaning in conventional rolling and scoring lines is due to the use of powders and the large number of rollers. As such, the clean up time for a change over, which was hours, 10 hours in some conventional rolling and scoring gum lines, can be reduced to minutes according to some embodiments of the present invention. Therefore, the embodiments of the present invention can increase the productivity of the gum manufacturing line by substantially reducing clean up/change over time when compared to traditional rolling and scoring gum lines.

Turning now to an exemplary embodiment that may effectively replace the powder mentioned above, it should be appreciated that the upper roller 26 may be equipped with an oiling roller 50 to lubricate the roller with a release agent such as food quality vegetable or mineral oil, which acts to prevent sticking of the gum to the rollers. Similarly, the lower roller 28 may be equipped with an oiling roller 52 to lubricate the lower roller. Therefore, the gum forming system 16 eliminates the need of powder releasing agents such as talc or a polyol. Although each of the rollers is provided with the oiling roller in the embodiments of FIGS. 1 and 2, in other embodiments, only one of the upper and lower rollers may be provided with one oiling roller, or none of the rollers may be provided with an oiling roller when the rollers have a sufficiently low surface tension or adhesion to release the gum sheet 13 without aid of a releasing agent and the gum sheet 13 is sufficiently not tacky for subsequent scoring, cutting and packaging processes. Further, other lubricating systems, for example, a spray bar or a dipping basin can be used to apply a suitable liquid lubricator.

The upper roller 26 may also be provided with a scraper near the gap 30 to ensure the gum sheet 13 detaches from the surface of the upper roller, thereby facilitating the gum sheet 13 to travel on the lower roller. The lower roller 28 may further be provided with a scrapper near the bottom of the lower roller to detach the gum sheet 13 from the surface of the lower roller 28 downstream of the gap 30 onto the conveyor belt 56. In some embodiments, the conveyor belt 56 may be adapted for cooling or heating to further condition the continuous sheet of gum sheet 13 similarly to the rollers discussed above. In addition, this conveyor belt may run at the same linear speed (i.e. at the second speed) as the depositing roller (lower roller in an exemplary embodiment), which is greater than the first speed at which the gum 12 arrives at the forming station 16 (via the conveyor 20 in FIGS. 1 and 2).

The system 10 may also include a smoothing roller 58 downstream of the forming station 16. The conveyor belt 56 moves the gum sheet 13 with its final (or at least substantially final) thickness toward the smoothing roller. The smoothing roller is arranged preferably about 0.5 m to 3 m from the lower roller 28, more preferably about 1 m - 1.5 m. The smoothing roller can remove surface imperfections, kinks, and may further reduce the thickness of the gum sheet 13, however usually any further reductions can be limited to 10% or less, and thus not have an effect on the final thickness or substantially final thickness of the sheet 13 (indeed, reduction in thickness by 10% or less, for purposes of this disclosure, will not be considered to impact a "substantially" final thickness of the sheet 13), while achieving advantages in that progressive rolling reductions are not necessitated. The embodiments shown in Figures 1 and 2 output the continuous gum sheet 13 having a thickness 32 within 10% of a desired final thickness of the final gum product (and thereby at a substantially final thickness as defined above), and the smoothing roller is configured to adjust the thickness of the gum sheet 13 by less than 10% (i.e. simply by smoothing, and thus again, not having an effect on a substantially final thickness). For example, in an implementation wherein the desired final thickness of a stick gum product is 2.0 mm, the gap 30 may be adjusted such that the continuous sheet gum sheet 13 has a generally uniform thickness of about 2.1 mm. In this implementation, the smoothing roller is arranged relative to the conveyor belt 56 to remove imperfections and kinks in a manner that may reduce the generally uniform thickness to about 2.0 mm. It should noted that any conveying device located downstream of the smoothing roller may run faster than the conveying device upstream of the smoothing roller.

In the exemplary embodiment of FIGS. 1 and 2 the system 10 further includes the scoring roller 21 and a lateral dividing or cutting roller 22 downstream of the gap 30 (and compression roller if used). The scoring roller 21 and the lateral dividing roller 22 score and may divide the gum sheet 13 into individual scored sheets. The scored sheets may then be conveyed to cooling tunnel for further conditioning (though the cooling tunnel may be rendered unnecessary in light of the improved cooling capabilities provided by the rollers 18). Thereafter, the gum may be transported to further processing and packaging equipment for producing packaged gum products, perhaps in a single line with the system 10 or other such systems. In some embodiments, the scoring roller 21 and the dividing roller 22 may be replaced with other gum shaping solutions, such as a drop-roller, a die cutter, pelletizer or other similar gum shaping equipment (provided the sheet is cooled to a sufficient extent). As such, the gum manufacturing system 10 or other such systems can produce a chewing gum having various final shapes, such as slabs which can subsequently be packaged, or pellets that are subsequently coated.

Although the system 10 is shown as a continuous line including the gum mixing system 14 in the Figures, in other embodiments, one or more of these components of the gum manufacturing system 10 or other such systems may be located in different parts of a manufacturing plant or even in a different manufacturing plant. For example, in one embodiment, the gum mixing system 14 is located in one plant, and the conveyor 20, gum forming system 16, and other subsequent components, such as the scoring and dividing rollers and packaging components, are located in a different plant, wherein the mixed gum mass 12 transferred from one plant to the other for subsequent processes.

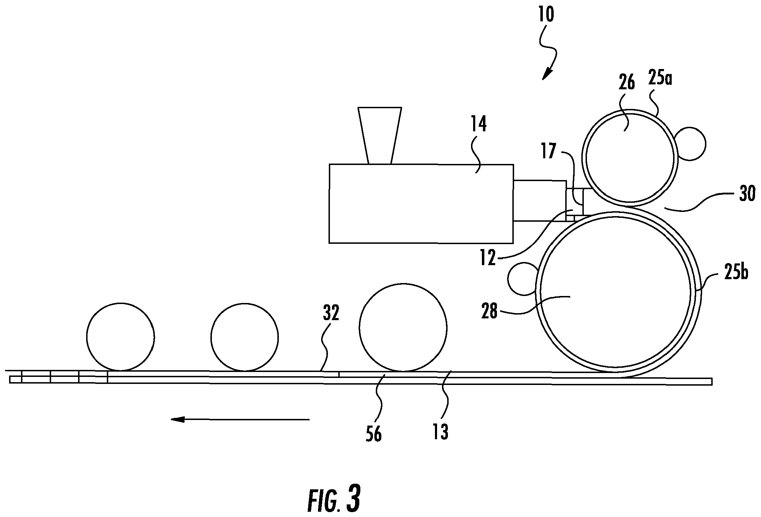

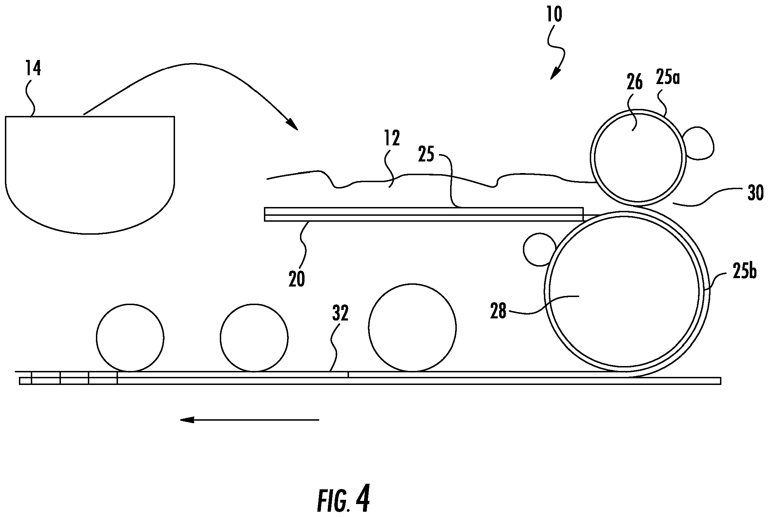

As show in FIG. 3, it should be appreciated that the conveyor 20 may be eliminated from the system 10. In such an embodiment, the mixing station 14 may output the gum 12 directly to the forming station 16 (directly onto the lower roller 28 in an exemplary embodiment), with the gum being output at the first speed discussed above, which is less than the speed of the rollers 18. The extruder/mixers 14 in any of FIGS. 1-3 may be a single mixer or multiple mixers (such as a continuous mixer or mixers) equipped with various mixer components and/or mixer feeding systems for processing gum ingredients to make the chewing gum. In addition, and as shown in FIG. 4, the mixer(s) 14 may be one or more batch mixers (or perhaps melting systems that melt previously formed gum into a condition in which it can be subsequently formed). In such embodiments, the gum 12 may be taken from the batch mixer(s) 14 to the conveyor 20, and transported thereon to the forming station 16 with an irregular thickness 70.

Lastly, while the pair of rollers 18 shown in each of FIGS. 1-4 are described and illustrated as being used for forming or sizing of the gum 12 into the sheet 13, it should be appreciated that these rollers 18 may also be used to cut or score gum 12 into scored or separated sheets or strips during or after forming/sizing. For example, one or both of the rollers 26 and 28 may be equipped with one or more scoring/cutting blades disposed across or around the one or both rollers 26 and 28, with these blades scoring/cutting the sheet 13 transverse to the direction of machine flow (creating cut or scored sheets) or in a direction of machine flow (creating cut or scored strips).

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A method of forming chewing gum, the method comprising:
providing a pair of rollers;
sizing the chewing gum from an unshaped mass into a first chewing gum sheet including a first thickness via a first sizing device, said first sizing device being disposed upstream of said pair of rollers;
transporting said first chewing gum sheet with said first thickness to said pair of rollers, and maintaining the chewing gum at said first thickness during said transporting between said first sizing device and said pair of rollers; and
sizing the first chewing gum sheet into a second chewing gum sheet having a second thickness solely using said pair of rollers, wherein said first thickness is greater than said second thickness, and said second thickness is between about 0.3 mm to 10 mm,
wherein said sizing said first chewing gum sheet into said second chewing gum sheet with said second thickness includes driving the pair of rollers in opposite directions to pull the chewing gum through a gap between the pair of rollers, and deforming said first chewing gum sheet to form the second chewing gum sheet.

2. The method of claim 1, wherein said sizing of the chewing gum to include said first thickness is an extruding of the chewing gum, and said first sizing device is an extruder.

3. The method of claim 1, wherein said transporting is a conveying of said first chewing gum sheet from a forming device to said pair of rollers via at least one conveyor.

4. The method of claim 1, wherein said transporting is a delivering of said first chewing gum sheet from a forming device to said pair of rollers without any intermediate conveying device.

5. The method of claim 2, wherein said transporting is a delivering of said first chewing gum sheet directly from said extruder to said pair of rollers.

6. The method of claim 1, wherein said first thickness is 10mm - 50mm.

7. The method of claim 1, wherein at least one of said pair of rollers includes at least one guide positioned to receive the chewing gum and direct said first chewing gum sheet to a gap between said pair of rollers.

8. The method of claim 1, wherein said pair of rollers includes two vertically displaced rollers.

9. The method of claim 1, wherein said thickness of said second chewing gum sheet changes by less than 10% after said sizing.

10. The method of claim 1, further including transporting said second chewing gum sheet from said pair of rollers at a speed that is greater than a speed associated with said transporting to said pair of rollers.

11. The method of claim 1, wherein a width of said first chewing gum sheet with said first thickness is the same as a width of said second chewing gum sheet with said second thickness.

12. The method of claim 1, wherein said first chewing gum sheet with said first thickness is transported to said pair of rollers at a first speed; and wherein the method further comprises transporting said second chewing gum sheet from said pair of rollers at a second speed that is greater than said first speed.

13. The method of claim 12, wherein said first thickness is at least 10mm.

14. The method of claim 13, wherein said sizing of the chewing gum includes extruding of the chewing gum.

## Patentansprüche

1. Verfahren zum Bilden von Kaugummi, wobei das Verfahren umfasst:
Bereitstellen eines Walzenpaars;
Dimensionieren des Kaugummis aus einer ungeformten Masse in eine erste Kaugummilage, die eine erste Dicke einschließt, mittels einer ersten Dimensionierungsvorrichtung, wobei die erste Dimensionierungsvorrichtung stromaufwärts des Walzenpaars angeordnet ist;
Transportieren der ersten Kaugummilage mit der ersten Dicke zu dem Walzenpaar und Halten des Kaugummis auf der ersten Dicke während des Transports zwischen der ersten Dimensionierungsvorrichtung und dem Walzenpaar; und
Dimensionieren der ersten Kaugummilage in eine zweite Kaugummilage mit einer zweiten Dicke ausschließlich unter Verwendung des Walzenpaars, wobei die erste Dicke größer als die zweite Dicke ist und die zweite Dicke zwischen etwa 0,3 mm und 10 mm liegt,
wobei das Dimensionieren der ersten Kaugummilage in die zweite Kaugummilage mit der zweiten Dicke das Antreiben des Walzenpaars in entgegengesetzte Richtungen, um den Kaugummi durch einen Spalt zwischen dem Walzenpaar zu ziehen, und das Verformen der ersten Kaugummilage, um die zweite Kaugummilage zu bilden, einschließt.

2. Verfahren nach Anspruch 1, wobei das Dimensionieren des Kaugummis, um die erste Dicke einzuschließen, ein Extrudieren des Kaugummis ist und die erste Bemessungsvorrichtung ein Extruder ist.

3. Verfahren nach Anspruch 1, wobei das Transportieren ein Befördern der ersten Kaugummilage von einer Formvorrichtung zu dem Walzenpaar über mindestens einen Förderer ist.

4. Verfahren nach Anspruch 1, wobei das Transportieren ein Zuführen der ersten Kaugummilage von einer Formvorrichtung zu dem Walzenpaar ohne jegliche Zwischenfördervorrichtung ist.

5. Verfahren nach Anspruch 2, wobei das Transportieren ein Zuführen der ersten Kaugummilage direkt von dem Extruder zu dem Walzenpaar ist.

6. Verfahren nach Anspruch 1, wobei die erste Dicke zwischen 10 mm-50 mm liegt.

7. Verfahren nach Anspruch 1, wobei mindestens eine Walze des Walzenpaars mindestens
eine Führung einschließt, die positioniert ist, um den Kaugummi aufzunehmen und die erste Kaugummilage zu einem Spalt zwischen dem Walzenpaar zu leiten.

8. Verfahren nach Anspruch 1, wobei das Walzenpaar zwei vertikal versetzte Walzen einschließt.

9. Verfahren nach Anspruch 1, wobei sich die Dicke der zweiten Kaugummilage nach dem Dimensionieren um weniger als 10 % ändert.

10. Verfahren nach Anspruch 1, ferner einschließend das Transportieren der zweiten Kaugummilage von dem Walzenpaar mit einer Geschwindigkeit, die größer ist als eine Geschwindigkeit, die mit dem Transportieren zu dem Walzenpaar verbunden ist.

11. Verfahren nach Anspruch 1, wobei eine Breite der ersten Kaugummilage mit der ersten Dicke gleich einer Breite der zweiten Kaugummilage mit der zweiten Dicke ist.

12. Verfahren nach Anspruch 1, wobei die erste Kaugummilage mit der ersten Dicke mit einer ersten Geschwindigkeit zu dem Walzenpaar transportiert wird; und wobei das Verfahren ferner das Transportieren der zweiten Kaugummilage von dem Walzenpaar mit einer zweiten Geschwindigkeit umfasst, die größer als die erste Geschwindigkeit ist.

13. Verfahren nach Anspruch 12, wobei die erste Dicke mindestens 10 mm beträgt.

14. Verfahren nach Anspruch 13, wobei das Dimensionieren des Kaugummis einschließt:
Extrudieren des Kaugummis.

## Revendications

1. Procédé de formation de chewing-gum, le procédé comprenant :
la fourniture d'une paire de rouleaux ;
le dimensionnement du chewing-gum depuis une masse sans forme en une première feuille de chewing-gum incluant une première épaisseur par l'intermédiaire d'un premier dispositif de dimensionnement, ledit premier dispositif de dimensionnement étant disposé en amont de ladite paire de rouleaux ;
le transport de ladite première feuille de chewing-gum avec ladite première épaisseur vers ladite paire de rouleaux, et le maintien du chewing-gum à ladite première épaisseur pendant ledit transport entre ledit premier dispositif de dimensionnement et ladite paire de rouleaux ; et
le dimensionnement de la première feuille de chewing-gum en une deuxième feuille de chewing-gum ayant une deuxième épaisseur seulement en utilisant ladite paire de rouleaux, dans lequel ladite première épaisseur est supérieure à ladite deuxième épaisseur, et ladite deuxième épaisseur est comprise entre environ 0,3 mm et 10 mm,
dans lequel ledit dimensionnement de ladite première feuille de chewing-gum en ladite deuxième feuille de chewing-gum avec ladite deuxième épaisseur inclut l'entraînement de la paire de rouleaux dans des directions opposées pour tirer le chewing-gum à travers un espace entre la paire de rouleaux, et la déformation de ladite première feuille de chewing-gum pour former la deuxième feuille de chewing-gum.

2. Procédé selon la revendication 1, dans lequel ledit dimensionnement du chewing-gum pour inclure ladite première épaisseur est une extrusion du chewing-gum, et ledit premier dispositif de dimensionnement est une extrudeuse.

3. Procédé selon la revendication 1, dans lequel ledit transport est un convoyage de ladite première feuille de chewing-gum à partir d'un dispositif de formation vers ladite paire de rouleaux par l'intermédiaire d'au moins un convoyeur.

4. Procédé selon la revendication 1, dans lequel ledit transport est une distribution de ladite première feuille de chewing-gum à partir d'un dispositif de formation vers ladite paire de rouleaux sans aucun dispositif convoyeur intermédiaire.

5. Procédé selon la revendication 2, dans lequel ledit transport est une distribution de ladite première feuille de chewing-gum directement à partir de ladite extrudeuse vers ladite paire de rouleaux.

6. Procédé selon la revendication 1, dans lequel ladite première épaisseur va de 10 mm à 50 mm.

7. Procédé selon la revendication 1, dans lequel au moins l'un parmi ladite paire de rouleaux inclut au
moins un guide positionné pour recevoir le chewing-gum et diriger ladite première feuille de chewing-gum vers un espace entre ladite paire de rouleaux.

8. Procédé selon la revendication 1, dans lequel ladite paire de rouleaux inclut deux rouleaux déplacés verticalement.

9. Procédé selon la revendication 1, dans lequel ladite épaisseur de ladite deuxième feuille de chewing-gum change de moins de 10 % après ledit dimensionnement.

10. Procédé selon la revendication 1, incluant en outre le transport de ladite deuxième feuille de chewing-gum à partir de ladite paire de rouleaux à une vitesse qui est supérieure à une vitesse associée audit transport vers ladite paire de rouleaux.

11. Procédé selon la revendication 1, dans lequel une largeur de ladite première feuille de chewing-gum avec ladite première épaisseur est identique à une largeur de ladite deuxième feuille de chewing-gum avec ladite deuxième épaisseur.

12. Procédé selon la revendication 1, dans lequel ladite première feuille de chewing-gum avec ladite première épaisseur est transportée vers ladite paire de rouleaux à une première vitesse ; et dans lequel le procédé comprend en outre le transport de ladite deuxième feuille de chewing-gum à partir de ladite paire de rouleaux à une deuxième vitesse qui est supérieure à ladite première vitesse.

13. Procédé selon la revendication 12, dans lequel ladite première épaisseur est d'au moins 10 mm.

14. Procédé selon la revendication 13, dans lequel ledit dimensionnement du chewing-gum inclut
l'extrusion du chewing-gum.
